**Europäisches Patentamt**

**European Patent Office**

**Office européen des brevets**

(11) Publication number: **0 164 408**
**B1**

(12) **EUROPEAN PATENT SPECIFICATION**

(45) Date of publication of patent specification: **28.02.90**

(51) Int. Cl.⁵: **B 32 B 31/00**

(21) Application number: **85900369.1**

(22) Date of filing: **05.12.84**

(86) International application number:
**PCT/US84/01985**

(87) International publication number:
**WO 85/02583 20.06.85 Gazette 85/14**

(54) **VACUUM SYSTEM FOR USE IN MANUFACTURING LAMINATED GLASS.**

(30) Priority: **08.12.83 US 559337**

(43) Date of publication of application:
**18.12.85 Bulletin 85/51**

(45) Publication of the grant of the patent:
**28.02.90 Bulletin 90/09**

(84) Designated Contracting States:
**BE DE FR GB LU NL SE**

(56) References cited:

**No relevant documents have been disclosed.**

(73) Proprietor: **LOF GLASS INC**
**811 Madison Avenue P O Box 799**
**Toledo, Ohio 43695 (US)**

(72) Inventor: **CHAMBERS, Scott, W.**
**4067 North Carolyn Court**
**Millbury, OH 43447 (US)**

(74) Representative: **Hands, Horace Geoffrey et al**
**LEWIS W. GOOLD & CO. Whitehall Chambers 23,**
**Colmore Row**
**Birmingham B3 2BL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

US-A-3 971 668 discloses the use of sealing means surrounding the edges of a laminated assembly of glass and other sheets, the interior of the sealing means being connected to a vacuum source so that the laminate may be de-aired and the sheets can be bonded together by heat and pressure.

According to the present invention, apparatus for evacuating the space between at least two laminae of a laminated assembly comprises sealing means for surrounding the peripheral edges of the laminated assembly, a source of vacuum, and means providing communication between the said sealing means and said source, and is characterised in that sensing means is associated with said communication means and responsive to a predetermined increase in pressure to discontinue communication between said sealing means and said source and prevent damage to the latter.

The stacked arrangement of individual laminae having the sealing means attached thereto is positioned within a heated, pressurised chamber which simultaneously applies pressure to the exterior of the stacked laminae to further assist in urging the individual laminae toward one another, while the heat causes the plastic laminae to be bonded to the adjacent glass surfaces. In the event a leak occurs in the sealing means, the pressure within the chamber causes an increase in the line pressure which could possibly damage the vacuum source. The sensing means of the present invention monitors this increase in pressure and disconnects the vacuum source from the seal means, thereby preventing any possible damage to the vacuum source.

The present invention, will become readily apparent to one skilled in the art from reading the following detailed description in conjunction with the attached drawings, in which:

Figure 1 is a block diagram illustrating the apparatus of the present invention; and

Figure 2 is a sectional view taken along the line 2-2 of Fig. 1 and illustrating the sealing means coupled around a peripheral edge portion of a stacked arrangement of individual laminae adapted to form a laminated glass assembly.

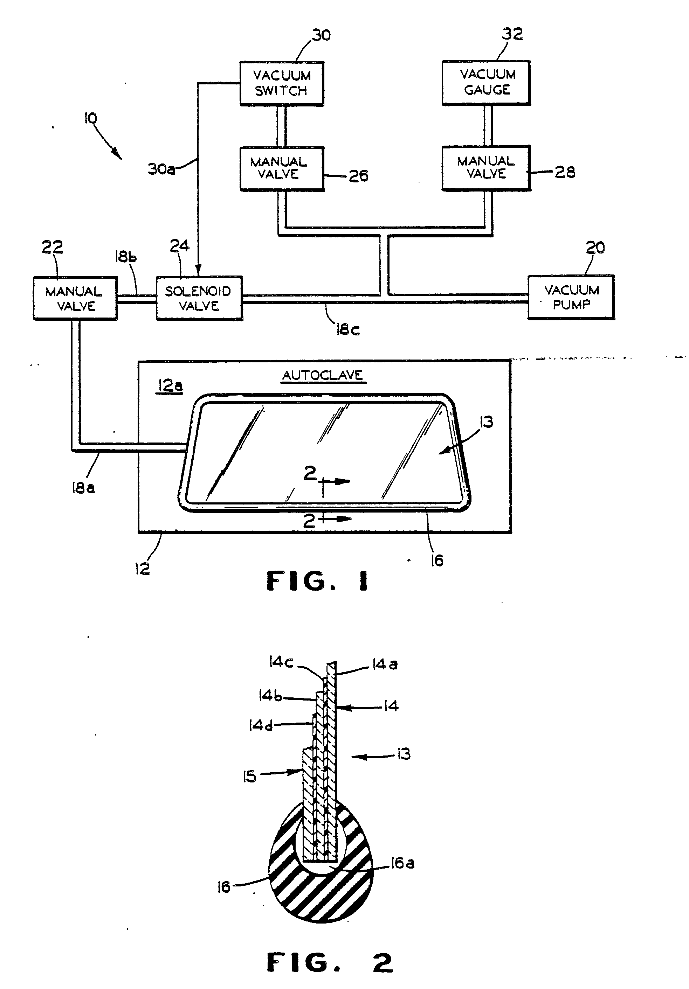

Referring to Figure 1, there is shown a block diagram of a vacuum system 10 embodying the features of the present invention. It should be noted at the outset of this description that, while the vacuum system is described for use in the manufacturing process of a laminated glass assembly, it will be appreciated that the vacuum system can be utilised in the manufacturing of other types of laminated assemblies.

The vacuum system 10 of Figure 1 is used in conjunction with an autoclave unit 12. The autoclave unit 12 includes a heated and pressurised chamber 12a for receiving a stacked arrangement of individual plastic and glass laminae 13 adapted to form a laminated glass assembly. The pressure within the chamber 12a, generally within the range of 15.51 - 18.96 bar functions to urge the individual laminae 13 toward one another, while the heat, generally a temperature within the range of 93 - 149°C., causes the plastic laminae to bond to the adjacent glass laminae. The vacuum system 10 of the present invention is utilised to evacuate the space between the individual laminae 13 to further urge the individual laminae toward one another. A seal means 16 surrounds the peripheral edge portions of the laminae 13 and is coupled to the vacuum system 10.

As shown in Fig. 2, the laminae 13 comprises a windshield assembly 14 and a cover sheet 15. The windshield assembly 14 includes an outer glass sheet 14a, an inner glass sheet 14b, a plastic interlayer 14c positioned between the glass sheets 14a and 14b, and a second plastic layer 14d positioned on the surface of the inner glass sheet 14b opposite the plastic interlayer 14c. The cover sheet 15 is positioned adjacent the plastic layer 14d and is utilised as a press mould to bond the plastic layer 14d to the inner surface of the glass sheet 14b. The surface of the cover sheet 15 adjacent the plastic layer 14d is provided with a suitable wax coating to prevent the layer 14d from bonding to the cover sheet. The seal means 16 is adapted to sealingly engage the outer surfaces of the sheets 14a and 15 to define an enclosed chamber 16a.

The enclosed chamber 16a is connected to a conduit section 18a which communicates with a vacuum pump 20 through a manual valve 22, a conduit section 18b, a solenoid valve 24, and a conduit section 18c. A vacuum switch 30 is connected to monitor the pressure in the conduit section 18c through a manual valve 26. The switch 30 generates a signal on a line 30a to either open or close the solenoid valve 24, depending on the pressure in the conduit section 18c. When the pressure in the conduit section 18c increases to a predetermined amount, the switch 30 generates a signal on a line 30a which causes the solenoid valve 24 to close, thereby disconnecting the vacuum pump 20 from the seal means 16. A vacuum gauge 32 is connected to the conduit section 18c through a manual valve 28 to provide the operator with an indication of the vacuum level in the conduit section 18c.

It has been found desirable to provide a vacuum switch 30 of the type which will open automatically on a pressure increase above a predetermined set point, but must be manually reset to close on a pressure decrease below the predetermined set point. For example, the switch 30 can be manually set to close and generate a signal to open the solenoid valve when the pressure in the conduit section 18c falls below atmospheric pressure. Thus, before the vacuum pump 20 is activated, the vacuum switch 30 is open and the solenoid valve 24 is closed and, when the vacuum pump 20 is activated, the vacuum switch 30 will sense the pressure drop below atmospheric pressure and close to generate a signal on the line 30a, thereby causing the solenoid valve 24 to open and apply a vacuum within the chamber 16a of the seal means 16. In the event a leak occurs within the sealing means or the associated connections thereto, the vacuum switch 30 will sense the pressure increase above atmospheric pressure and will open to cause the solenoid valve 24 to close, thus preventing the relatively high pressure within the autoclave unit 12 from entering the conduit section 18c protecting the vacuum pump and the vacuum gauge. In order for the switch 30 to operate again, the switch must then be manually reset. The manual valves 22, 26 and 28 can be used to isolate various sections of the vacuum system in order to assist in detecting the location of a vacuum leak.

## Claims

1. Apparatus for evacuating the space between at least two laminae (13) of a laminated assembly comprising sealing means (16) for surrounding the peripheral edges of the laminated assembly, a source of vacuum (20), and means (18) providing communication between the said sealing means and said source, and is characterised in that sensing means (30) is associated with said communication means (18) and responsive to a predetermined increase in pressure to discontinue communication between said sealing means (16) and said source (20) and prevent damage to the latter.

2. Apparatus according to Claim 1, characterised in that said sensing means (30) is arranged to operate a valve means (24) located in said communication mans (18) between said sealing means (16) and said source (20).

3. Apparatus according to Claim 2, characterised in that said sensing means includes a vacuum switch means (30) coupled to monitor the pressure in said communication means (18), said switch means (30) being responsive to a predetermined increase in pressure in said communication means for closing said valve means (24).

## Patentansprüche

1. Vorrichtung zum Evakuieren des Raumes zwischen wenigstens zwei Schichten einer laminierten Zusammenordnung, enthaltend eine Versiegelungseinrichtung (16) zum Umfassen der Umfangsränder der laminierten Zusammenordnung, eine Vakuumquelle (20) sowie Einrichtungen (18), die eine Verbindung zwischen der Versiegelungseinrichtung und der genannten Quelle herstellen, dadurch gekennzeichnet, daß eine Fühlereinrichtung (30) mit den Verbindungseinrichtungen (18) verbunden ist und auf einen vorbestimmten Druckanstieg anspricht, um die Verbindung zwischen der Versiegelungseinrichtung (16) und der Quelle (20) zu unterbrechen und um eine Beschädigung an der letzteren zu verhindern.

2. Vorrichtung nach Anspruch 1, dadurch gekennzeichnet, daß die Fühlereinrichtung (30) so vorgesehen ist, daß sie eine Ventileinrichtung (24) betätigt, die in den genanten Verbindungseinrichtungen (18) zwischen der Versiegelungseinrichtung (16) und der Quelle (20) angeordnet ist.

3. Vorrichtung nach Anspruch 2, dadurch gekennzeichnet, daß die Fühlereinrichtung eine Vakuumschalteinrichtung (30) enthält, die so gekoppelt ist, daß sie den Druck in den Verbindungseinrichtungen (18) überwacht, wobei diese Schalteinrichtung (30) auf einen vorbestimmten Druckanstieg in diesen Verbindungseinrichtungen anspricht, um die genante Ventileinrichtung (24) zu schließen.

## Revendications

1. Appareil pour faire le vide dans l'espace séparant au moins deux feuilles (13) d'un ensemble laminé comprenant un moyen d'étanchéité (16) entourant les bords périphériques de l'ensemble laminé, une source de vide (20), et un moyen (18) assurant la communication entre ledit moyen d'étanchéité et ladite source, et caractérisé par le fait qu'un moyen de détection (30) est associé audit moyen de communication (18), et répond à une augmentation prédéterminée de pression pour interrompre la communication entre ledit moyen d'étanchéité (16) et ladite source (20) afin d'éviter d'endommager cette dernière.

2. Appareil selon la revendication 1, caractérisé en ce que ledit moyen détecteur (30) est agencé pour manoeuvrer un moyen à vannes (24) installé dans ledit moyen de communication (18) entre ledit moyen d'étanchéité (16) et ladite source (20).

3. Appareil selon la revendication 2, caractérisé en ce que ledit moyen de détection comprend un moyen de commutation à vide (30) couplé pour surveiller la pression dans ledit moyen de communication (18), ledit moyen de commutation (30) répondant à une augmentation prédéterminée de la pression dans ledit moyen de communication pour fermer ledit moyen de vanne (24).

**FIG. 1**

**FIG. 2**